(19) Europäisches Patentamt

European Patent Office

Office européen des brevets

(11) **EP 1 046 361 A1**

(12) **EUROPEAN PATENT APPLICATION**

(43) Date of publication:
**25.10.2000 Bulletin 2000/43**

(51) Int. Cl.[7]: **A47C 27/06**

(21) Application number: **99201226.0**

(22) Date of filing: **21.04.1999**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **RECTICEL
1200 Brussels (BE)**

(72) Inventor: **Deschaumes, Charles
9700 Oudenaarde (BE)**

(74) Representative:
**Van Reet, Joseph et al
Gevers & Vander Haeghen,
Patent Attorneys,
Rue de Livourne 7
1060 Brussels (BE)**

(54) **Resilient body supporting element and plastic spring suited for use therein**

(57)     A resilient body supporting element, in particular a mattress, a cushion, a bed base, a seat or other upholstered furniture, comprising two outer layers and a number of plastic springs (3) arranged between those layers. The plastic springs (3) are mainly formed by at least two substantially coaxial helical coils (5) which are mutually connected at their opposite ends by two end structures (6, 7), in particular by rings. Compared to plastic springs form by one helical coil, the springs according to the invention have a larger free stroke, i.e. have a smaller height when maximally compressed, and show further a greater stability.

Fig.3

## Description

The present invention relates to a resilient body supporting element, in particular a mattress, a cushion, a bed base, a seat or other upholstered furniture, comprising two outer layers and a number of plastic springs arranged between those layers.

In practice, the plastic springs of such an element may either be bellows or spiral springs. A mattress having a core of plastic bellows springs is already disclosed in a number of patent publications including EP-A-0 853 901 in the name of the present applicant. It has been found however that plastic bellows springs have a too short useful life, or in other words no good fatigue properties, and that they are moreover relatively expensive. As prior art for the use of plastic spiral springs in mattresses, reference can be made to US-A-2 415 374 and DE-U-93 16 609. In practice such mattresses have not yet been put on the market or have at least not been very successful. This may be due to the fact that the wire coils of the known plastic spiral springs must have a large cross-section in order to provide the necessary spring properties. This means that the free stroke of the known plastic springs is reduced and is in particular considerably smaller than the free stroke of the conventional steel springs used in mattresses. Moreover, a problem of the known plastic helical springs is their relatively small stability so that they should either be inserted in a supporting structure or be fixed to a rigid stiffening structure.

An object of the present invention is therefore to provide a new resilient body supporting element with plastic springs which enable to obviate at least some of the above-described drawbacks of the use of the known plastic spiral springs in such elements, in particular in mattresses.

To this end, the resilient body supporting element according to the invention is characterised in that said plastic springs are mainly formed by at least two substantially coaxial helical coils which are mutually connected at their opposite ends by two end structures.

According to the invention it has been found that by using springs having more than one helical coil, a more stable spring is obtained so that the springs can be fixed for example simply by gluing them to the outer layers without necessarily requiring a stiffening structure, and that it is moreover possible to increase the free stroke of the springs so that they can, in other words, be compressed to a larger extend whilst providing still the same spring properties. These spring properties are determined by the so-called spring constant or spring coefficient expressed for example in N/cm. By providing more than one coil, the individual coils are less loaded so that the wire diameter thereof may be smaller and so that better fatigue properties can be expected.

In an advantageous embodiment of the element according to the invention, said helical springs comprise 3 to 10, preferably 4 to 8, and most preferably 6 substantially coaxial helical coils whilst in a preferred embodiment of the element according to the invention, said coaxial helical coils show 0.5 to 5 effective windings, and preferably 1 to 3 effective windings.

By providing more coils, not only the stability of the springs is increased but, as a result thereof, the individual coils may also show less windings. This means that, in order to achieve a same spring constant, the wire diameter of the individual coils may not only be reduced as a result of the fact that more coils are provided but also due to the fact that the spring constant of the individual coils is increased by having reduced the number of effective windings thereof.

The invention also relates to a plastic spring suited for use in a resilient body supporting element according to the invention. This plastic spring is characterised in that it is mainly formed by at least two substantially coaxial helical coils which are mutually connected at their opposite ends by two end structures

Other particularities and advantages of the invention will become apparent from the following description of some particular embodiments of the body supporting element according to the present invention and especially of the plastic springs used therein. This description is only given by way of illustrative example and is not intended to limit the scope of protection. The reference numerals relate to the annexed drawings wherein:

Figure 1 shows a longitudinal section through a resilient body supporting element according to the invention, in particular through a mattress;
Figure 2 shows, on a larger scale, a perspective view of a plastic spring from the mattress shown in Figure 1; and
Figure 3 shows a longitudinal sectional view through the plastic spring shown in Figure 2.

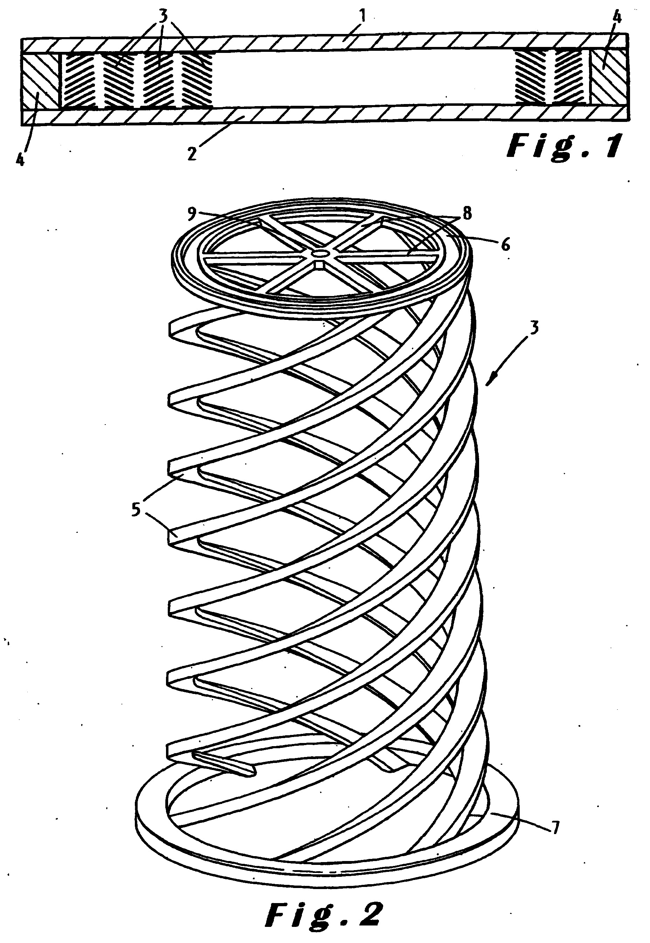

The body supporting resilient element according to the invention may have different shapes and compositions and is in particular a mattress, cushion, a base of a bed or a sofa, a seating or back rest of any seat or any other upholstered furniture. In Figure 1, a mattress according to the invention is schematically illustrated. The mattress comprises two outer layers, more particularly a top 1 and a bottom layer 2 which may be made of a natural or synthetic foam material such as latex or polyurethane foam. Between these two layers 1, 2, a number of plastic springs 3 are arranged. At the edges, the free space between the layers 1 and 2 is closed off by means of further foam pieces 4. It will be clear that when, in contrast to a mattress, the body supporting element according to the invention is used in an upright position, such as for example a back rest, the top and bottom layer 1, 2 mean respectively the front and the back layer.

The plastic springs 3 shown in Figure 1 may simply be glued either directly to the top and bottom layers 1 and 2 or through the intermediary of intermediate layers, for example textile layers to which the springs 3 can for example be fixed by sewing. On the other hand, also more rigid intermediate layers can be used, such as a cocos layer wherein recesses can be provided wherein the extremities of the springs fit or to which the springs can be fixed by means of threads. Further, the mattress may also be formed partially or entirely by a foam matrix wherein holes are provided wherein the springs can be inserted. Another possibility is to insert the springs into series of mutually connected bags to form a so-called box-spring core disclosed for example in EP-B-0 545 956 in the name of the present applicant. It will be clear that many other different mattress constructions may be possible, for example wherein the upper and lower extremities of the plastic springs 3 are for example foamed in the top and bottom layer, and that the shape or composition of the mattress or other body supporting element is not limiting at all for the scope of protection. In case of a bed or seat base, the top and or bottom layers may for example be formed by a textile layer.

An essential feature of the springs 3 is that they are mainly formed by at least two substantially coaxial helical coils 5 which are mutually connected at their opposite ends by two end structures 6,7. These end structures are preferably relatively rigid and may in particular be made of the same material as the coils 5. As already explained hereabove, the use of two or more coils in one plastic spring enables to achieve a better stability of the individual springs, a larger free stroke, i.e. a smaller thickness of the entirely compressed spring, and possibly also better fatigue properties. This can be illustrated on the basis of some theoretical considerations starting from the following spring equation established for a spiral spring made up of one coil with a circular cross-section:

$$c = \frac{G*d^4}{8*D^3*n}$$

wherein:

c = spring constant or spring coefficient
G = material constant
d = wire diameter
D = main spring diameter
n = number of windings.

When providing N coils instead of one coil in the spring, then the spring constant of each individual coil may be N times smaller in order to maintain the same global spring constant c. Based on the above equation, this means that the wire diameter of the individual coils may be $\sqrt[4]{N}$ times smaller than d. Due to the larger number of individual coils in the spring, and thus the increased stability thereof, the individual coils may show less windings, for example N times less windings (=n/N) so that the N individual coils provide a spring with in total the same number of windings. Based on the above equation, this means that the wire diameter of the individual coils may once more be $\sqrt[4]{N}$ times smaller than d in order to achieve the same spring constant. Replacing the single coil showing n windings in a known plastic spring by N coils with n/N windings enables thus to reduce the wire diameter of the individual coils $\sqrt{N}$ times, i.e. enables to reduce the wire diameter from d to $d/\sqrt{N}$.

For the single coil spring, when completely compressed, the minimal height comprises n*d whereas for the spring with N coils, showing each only n/N windings (thus in total also n windings), the minimal height comprises only $n*d/\sqrt{N}$ , which is in other words $\sqrt{N}$ times smaller.

As to the amount of plastic material necessary for making the spring, it should first of all be noted that the cross-sectional area of the coil of the spring with one coil comprises

$$\frac{\pi*d^2}{4}$$

whereas the cross-sectional area of each individual coil of the spring with N coils comprises

$$\frac{\pi*d^2}{4*N}.$$

The total cross-sectional area of the N coils is thus equal to the cross-sectional area of the coil of the spring formed by a single coil. Due to the fact that the N coils all have to extend from the bottom to the top of the coil, there total length will be somewhat greater and thus also their total volume or the amount of plastic material contained therein. As a result of the smaller diameter of the individual coils and the somewhat greater amount of plastic material included therein, the fatigue properties of the spring with more than one coil are expected to be better.

As a more specific example, a spring with a single coil with 9 windings could be replaced by a spring with 6 coaxial coils showing each only 1.5 windings, i.e. in total also 9 windings. In order to achieve the same spring constant, the cross-sectional area of the individual coils may be 6 times and the wire diameter $\sqrt{6}$ (=2.45) times smaller. The minimal height upon total compression of the spring will then also be 2.45 times smaller.

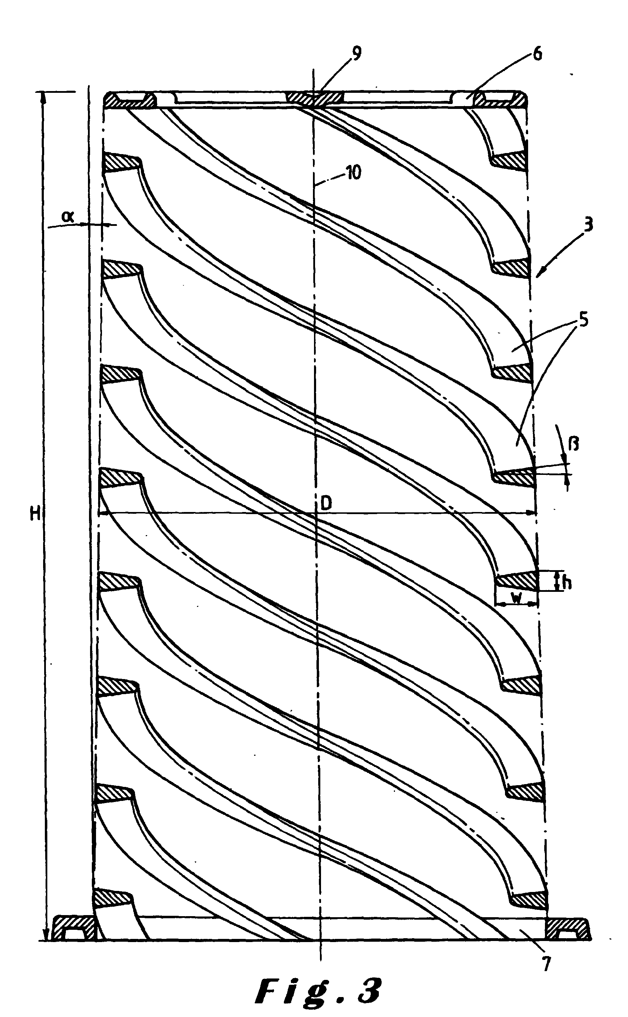

In Figures 2 and 3, a practical embodiment of the spring according to a particular embodiment of the invention has been shown. In this embodiment the spring 3 comprises six coaxial coils 5 each extending over 1.33 windings. In total, the spring 3 thus shows eight windings and the minimal thickness of the spring, when maximally compressed, comprises eight times the thickness (height h) of the individual coils 5. In order to obtain an optimal stability, the helical coils 5 are equidistant from one another and are thus arranged on mutual angles of 60°.

The spring 3 shown in Figures 2 and 3 has such a design that it can easily be made by injection moulding techniques, i.e. in a mould wherein the material of the spring, more particularly a thermoplastic material is injected in molten state. The mould can for example be composed of a cylindrical or preferably somewhat conical core showing a spiral groove wherein the thermoplastic material for the coils is to be injected and a corresponding hollow mould part, comprising an injection gate, wherein the core can be inserted axially to close off the surface of the core.

The two end structures 6 and 7 which connect the individual coils 5 as illustrated in Figures 2 and 3 respectively at their upper and lower ends to one another are formed by an upper or first ring 6 and a lower or second ring 7. In order to allow demoulding of the spring 5 from the core described hereabove, at least one of the rings is located entirely outside the outer surface formed by the coils. In the embodiment as illustrated in Figures 2 and 3, it is the lower ring 7 which is laterally connected to the lower extremities of the helical coils 5. The upper ring 6 may also be connected laterally to the upper extremities of the coils 5 but preference is given to a connection of these extremities to the bottom surface of the upper ring 6 in order to facilitate filling of the coils 5 during the injection moulding operation. Indeed, within the upper ring 6 are provided radial arms 8 formed by the injection runners through which the molten thermoplastic material is injected into the ring 6 and the coils 5. These arms 8 run from a common central injection point 9 to the ring 6 and are preferably connected thereto at the same locations as the coils 5. In this way, the molten thermoplastic material can flow directly into the coils 5. It will be clear that, after having moulded the spring 3, the arms 8 can be removed although they may also be maintained in order to obtain an additional support for the top or bottom layer 1, 2.

The helical coils 5 may show different shapes and may in particular be cylindrical. However, as can best be seen in Figure 3, the helical coils 5 are preferably somewhat conical, this in view of facilitating demoulding of the spring 3. They more particularly form a truncated cone, the outer surface of which forms an angle α equal to for example 1° with the longitudinal direction of the central axis 10 of the spring. In this case, the ring 7 extending outside the outer surface of this truncated cone is situated at the largest base thereof so that it can be slid over the core of the mould when demoulding the spring. In a variant embodiment, in order to change the properties of the spring, the helical coils 5 could also be made bi-conical having their smallest outer diameter in the middle of the spring. Of course, the core around which the spring can be moulded has then to consist of at least two parts.

Due to the different ways wherein the rings 6 and 7 are connected to the coils 5 and due to the conical shape of these coils, the spring shown in Figures 2 and 3 has a top surface which is smaller than the bottom surface. In the mattress shown in Figure 1, the springs 3 have therefore alternately be arranged with their top upwards and with their bottom upwards so that they could be arranged closer together and so that the top and bottom layers are supported in the same way.

As discussed hereabove, the individual coils 5 of the spring 3 may have a circular cross-section. When making the springs by the injection moulding technique, the coils 5 have, however, preferably a substantially rectangular or trapezoidal cross-section, the side of which directed to the central axis of the spring 3 being preferably somewhat convex, with rounded corners, as shown in Figure 3. In order to facilitate demoulding, this side is preferably also smaller than the opposite side, or in other words, the top and bottom surfaces of the coils 5 preferably converge to one another in the direction of the central spring axis so that the coils have a substantially trapezoidal cross-section. In the embodiment shown in Figure 3, they more particularly each converge under an angle β with the radial direction of about 8°. Instead of a rectangular or trapezoidal cross-section, the coils 5 may further have a triangular cross-section or a half circular or oval cross-section, the circular or oval side being preferably directed towards the main central axis 10 of the spring.

In view of reducing the minimal height of the spring when being entirely compressed, the coils 5 have preferably a cross-section, the maximum height h of which, measured in the direction of the main central axis 10 of the coils 5, is smaller than the maximum width w thereof measured in the radial direction of the coils.

The spring shown in Figures 2 and 3 can show different dimensions depending on the application thereof. Without being limiting, the coils 5 may have for example a total height H of 5 to 17 cm, and preferably a height H of 10 to 14 cm. They may further have an average outer diameter D of 3 to 15 cm, preferably of 4 to 12 cm, and most preferably of 5 to 9 cm. In a very specific embodiment, the spring illustrated in Figures 2 and 3 has a height H of 12 cm and an average diameter D (measured in the middle of the coils) of 6 cm. The cross-section of the individual coils 5 have a maximum height h of 2.6 mm and a maximum width (measured until the top of the curved lateral side) of 5 mm, this latter width increasing preferably towards the middle of the spring to 6 mm in order to reduce outward deformations of the spring when being compressed. In this specific embodiment, the spring has a minimal height of only about 2 cm (=2.6 cm *8 windings) thus providing a large free stroke of about 10 cm which is very advantageous when being used for example in a biomedical mattress where compressions until 10 cm may be desired.

The spring described hereabove comprised 8 helical coils showing each 1.33 effective windings. It will be clear that these numbers can be varied within large ranges. Usually, the spring will comprise from 3 to 10 coils, and preferably from 4 to 8 coils while these coils show from 0.5 to 5 effective windings, and preferably from 1 to 3 effective windings.

The spring can be made of different plastic materials, including in particular thermosetting and thermoplastic materials. As possible thermosetting materials, reference can be made to the thermosetting materials used in EP-A-0 328 014 as core material of plastic springs and to the thermosetting materials disclosed in US-A-4 773 633 for plastic springs. A particular preference is however given to the use of thermoplastic materials which can be recycled and more particularly to polyoxymethylene homo- or copolymers (POM). The spring shown in Figures 2 and 3 can for example be made in one step by an injection moulding process wherein the entire spring, including the rings 6 and 7, are solely made of POM. POM is for example put on the market by Du Pont de Nemours under the denomination "Delrin", which is an entire family of POM materials, a particular preference being given to Delrin 511P. Other alternative materials which could be used are co-polyesters from the "Arnitel" family (put on the market by DSM), in particular Arnitel EB460, and conventional polyamide, in particular PA 66, reinforced with glass or other fibres.

The coils of the spring do not necessarily have to be made of one material. As mentioned already hereabove, it is for example possible to reinforce the plastic material by providing fibres therein, for example glass, carbon, aramid or steel fibres, as disclosed for example in WO 96/14519 and in US-A-4 773 633. Further, a steel or synthetic wire may be provided within the coils as disclosed in WO 96/14519. The coils may also be formed of layers of different material, for example of a polymeric outer layer and a polymeric inner or core layer as disclosed in EP-A-0 328 014.

From the above given description of some particular embodiments of the spring according to the invention, it will be clear that many other modifications can be applied thereto without departing from the scope of protection as defined in the annexed claims. It is for example possible to provide the end surfaces of the rings 6 and 7 with a relief in order to improve the adherence to the top and bottom layer 1, 2 when being glued thereto. Moreover, the end structures 6 and 7 do not necessarily have to be rings but they may for example also be formed by plates which may in particular be rectangular or cylindrical and wherein ventilation holes may be provided.

**Claims**

1. A resilient body supporting element in particular a mattress, a cushion, a bed base, a seat or other upholstered furniture, comprising two outer layers (1, 2) and a number of plastic springs (3) arranged between those layers (1, 2), characterised in that said plastic springs (3) are mainly formed by at least two substantially coaxial helical coils (5) which are mutually connected at their opposite ends by two end structures (6, 7).

2. An element according to claim 1, characterised in that said helical coils (5) are substantially equidistant from one another.

3. An element according to claim 1 or 2, characterised in that said springs (3) comprise 3 to 10, preferably 4 to 8, and most preferably 6 substantially coaxial helical coils (5).

4. An element according to any one of the claims 1 to 3, characterised in that said coaxial helical coils (5) show 0.5 to 5 effective windings, and preferably 1 to 3 effective windings.

5. An element according to any one of the claims 1 to 4, characterised in that the two opposite supporting end structures (6, 7) comprise respectively a first (6) and a second ring (7) to which the helical coils (5) are connected.

6. An element according to any one of the claims 1 to 5, characterised in that the helical coils (5) form a truncated cone.

7. An element according to claim 5 and 6, characterised in that said second ring (7) connects the helical coils (5) at the largest base of the truncated cone and is located outside the outer surface of the truncated cone.

8. An element according to any one of the claims 1 to 7, characterised in that said plastic springs (3) are made of a thermoplastic material, in particular of a polyoxymethylene homo- or copolymer, which thermoplastic material is optionally reinforced with fibres.

9. An element according to any one of the claims 1 to 8, characterised in that said helical springs (3) are injection moulded.

10. An element according to any one of the claims 1 to 9, characterised in that said coils have a substantial rectangular or trapezoidal cross-section, the maximum height (h) of this cross-section, measured in the direction of the main central axis (10) of the coils (5), being preferably smaller than the maximum width (w) thereof measured in a radial direction of the helical coil (5).

**11.** An element according to any one of the claims 1 to 10, characterised in that said coils have a cross-sectional area which varies over their length and which is in particular larger near the middle of the spring (3).

**12.** An element according to any one of the claims 1 to 11, characterised in that the helical coils (5) of the plastic springs have an average outer diameter (D) of 3 to 15 cm, preferably of 4 to 12 cm, and most preferably of 5 to 9 cm.

**13.** An element according to any one of the claims 1 to 12, characterised in that the helical coils (5) of said plastic springs (3) have a height (H) of 5 to 17 cm, and preferably a height of 10 to 14 cm.

**14.** A plastic spring suited for use in an element according to any one of the claims 1 to 13, characterised in that it is mainly formed by at least two substantially coaxial helical coils (5) which are mutually connected at their opposite ends by two end structures (6, 7).

**15.** A plastic spring according to claim 14 and showing the features defined thereof in any one of the claims 2 to 13.

**Fig. 1**

**Fig. 2**

*Fig.3*

**European Patent Office**

**EUROPEAN SEARCH REPORT**

Application Number

EP 99 20 1226

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 20 15 659 A (SPITZER) 15 October 1970 (1970-10-15) * claims 1-3,5,6,10; figures 1-3,5,6 * | 1-8,14, 15 | A47C27/06 |
| A | | 9-13 | |

TECHNICAL FIELDS SEARCHED (Int.Cl.7)

A47C

The present search report has been drawn up for all claims

| Place of search | Date of completion of the search | Examiner |
|---|---|---|
| THE HAGUE | 24 September 1999 | VandeVondele, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 20 1226

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-1999

| Patent document cited in search report | | Publication date | Patent family member(s) | | Publication date |
|---|---|---|---|---|---|
| DE 2015659 | A | 15-10-1970 | AT | 290767 B | 15-05-1971 |